Europäisches Patentamt

European Patent Office

Office européen des brevets

(19)

(11) Numéro de publication: **0 268 089 B1**

# FASCICULE DE BREVET EUROPEEN

(45) Date de publication de fascicule du brevet:
**28.08.91**

(51) Int. Cl.⁵: **G01S 13/02**, H01Q 9/06,
H01Q 9/26

(21) Numéro de dépôt: **87115247.6**

(22) Date de dépôt: **19.10.87**

(54) **Transpondeur passif.**

(30) Priorité: **22.10.86 CH 4205/86**
**13.11.86 FR 8615911**

(43) Date de publication de la demande:
**25.05.88 Bulletin 88/21**

(45) Mention de la délivrance du brevet:
**28.08.91 Bulletin 91/35**

(84) Etats contractants désignés:
**AT DE IT SE**

(56) Documents cités:
**EP-A- 0 172 445**    **FR-A- 2 311 422**
**FR-A- 2 346 870**    **FR-A- 2 455 749**
**GB-A- 692 692**    **GB-A- 2 050 769**
**GB-A- 2 139 856**    **GB-A- 2 163 297**

(73) Titulaire: **ETA S.A. Fabriques d'Ebauches**
**Schild-Rust-Strasse 17**
**CH-2540 Grenchen(CH)**

(72) Inventeur: **Nicolet, Richard**
**Ruffinistrasse 9**
**CH-2540 Granges(CH)**
Inventeur: **Koch, Daniel**

**CH-2746 Crémines(CH)**

(74) Mandataire: **de Montmollin, Henri et al**
**ICB Ingénieurs Conseils en Brevets SA Passage Max Meuron 6**
**CH-2001 Neuchâtel(CH)**

## Description

La présente invention a pour objet un transpondeur passif comportant deux éléments d'antenne reliés par un composant électronique non linéaire et par un conducteur disposé en parallèle avec le composant électronique passif.

Un tel transpondeur est décrit, par exemple, dans la demande de brevet EP-A-0 172 445.

Ses deux éléments d'antenne sont constitués chacun par une plaque métallique mince ayant par exemple une forme sensiblement rectangulaire.

Le composant électronique passif qui relie les deux éléments d'antenne est, par exemple, une diode à caractéristique courant-tension quadratique telle que la diode vendue sous le numéro 5 082-2835 par la société Hewlett-Packard.

Un tel transpondeur est notamment destiné à être porté par une personne courant le risque d'être prise sous une avalanche. Si un tel accident arrive, cette personne peut être localisée à l'aide d'un appareil de détection adéquat amené à proximité et comportant un émetteur produisant un rayonnement électromagnétique ayant une longueur d'onde sensiblement égale au double de la longueur totale du transpondeur.

Lorsqu'il est soumis à ce rayonnement électromagnétique, le transpondeur émet un deuxième rayonnement électromagnétique ayant une longueur d'onde sensiblement égale à sa longueur totale et donc sensiblement égale à la moitié de la longueur d'onde du rayonnement produit par l'émetteur. Ce deuxième rayonnement électromagnétique peut être capté par un récepteur adéquat que comporte également l'appareil de détection, ce qui permet de localiser le transpondeur et donc la personne qui le porte.

Les divers composants du transpondeur forment un circuit oscillant dont la fréquence de résonance doit être aussi proche que possible de la fréquence du rayonnement électromagnétique émis par l'appareil de détection pour que le rendement du transpondeur, c'est-à-dire le rapport entre la quantité d'énergie qu'il émet et celle qu'il reçoit, soit élevé.

Or, les plaques métalliques constituant les éléments d'antenne du transpondeur forment avec le corps de la personne qui porte celui-ci un condensateur parasite dont la capacité influence la fréquence de résonance du circuit oscillant mentionné ci-dessus.

Il n'est pas possible de compenser l'effet de ce condensateur parasite par un dimensionnement adéquat des autres composants du transpondeur, car sa capacité dépend directement de la distance séparant ce transpondeur du corps de la personne qui le porte, et que cette distance est variable selon que ce transpondeur est porté sur une ou plusieurs couches de vêtements.

La fréquence de résonance du circuit oscillant formé par les éléments du transpondeur n'est donc pratiquement jamais égale à la fréquence du rayonnement électromagnétique émis par l'appareil de détection, et le rendement du transpondeur n'est donc pratiquement jamais optimum.

En outre, ce condensateur parasite détourne vers le corps de la personne portant le transpondeur une partie de l'énergie reçue par ce dernier et une partie de l'énergie qu'il émet, ce qui provoque également une diminution du rendement du transpondeur.

La demande de brevet FR-A-2346870 suggère une solution au moins partielle à ce problème. Ce document décrit en effet une antenne de réception d'émissions de télévision transmises par des ondes à fréquence ultra-haute (UHF) qui comporte deux éléments rectangulaires plans constitués chacun par un ruban métallique formant une boucle entourant un espace dépourvu de tout élément métallique.

Il a été constaté que si on donne au deux éléments d'antenne d'un transpondeur une forme semblable à celle qui est décrite dans ce document FR-A-2346870, la capacité du condensateur formé par ces éléments d'antenne et le corps de la personne portant le transpondeur est beaucoup plus faible que dans le transpondeur de l'art antérieur.

La fréquence de résonance du circuit oscillant formé par les divers composants du transpondeur est donc beaucoup moins influencée par la capacité de ce condensateur parasite. Cette fréquence de résonance est donc toujours beaucoup plus proche de celle du rayonnement électromagnétique émis par l'appareil de détection, et le rendement de ce transpondeur est donc meilleur que celui du transpondeur connu.

La quantité d'énergie transmise par ce condensateur parasite au corps de la personne portant le transpondeur selon l'invention est également diminuée, ce qui augmente encore son rendement.

Mais il a été aussi constaté que la forme des boucles constituant les éléments d'antenne a également une influence sur le rendement du transpondeur ainsi que, pour la même forme de transpondeur, sur la variation de ce rendement d'un exemplaire à l'autre, et que la forme rectangulaire décrite dans le document FR-A-2346870 n'est de loin pas la plus favorable. Il a encore été constaté que la forme de l'ouverture délimitée par ces éléments d'antenne, par le composant électronique passif non linéaire et par le conducteur reliant les deux éléments d'antenne a également la même influence, qui est probablement due au fait que si les impédances des divers composants du transpondeur ne sont pas au moins sensiblement égales aux points où ces composants sont connectés les uns aux autres, il en résulte des pertes d'énergie dues aux réflexions qui se produisent en ces points.

Un but de la présente invention est de proposer un transpondeur du genre de celui qui est décrit dans la demande de brevet EP-A-0172445 mentionnée ci-dessus qui présente non seulement un rendement plus élevé que ce transpondeur connu mais encore un rendement plus constant d'un exemplaire à l'autre.

Ce but est atteint grâce au fait que chacun des éléments d'antenne du transpondeur est constitué par un ruban métallique formant dans son plan une boucle fermée entourant un espace dépourvu de tout élément métallique, ces boucles ayant la forme générale de trapèzes rectangles dont les petites bases sont disposées en regard l'une de l'autre et parallèlement l'une à l'autre, le composant électronique du transpondeur passif étant branché entre ces petites bases, et dont les côtés perpendiculaires aux bases sont alignés l'un sur l'autre, sont reliés par une portion conductrice également constituée par un ruban métallique, ayant une largeur inférieure à la largeur desdits côtés perpendiculaires aux bases et disposée de manière que son bord extérieur soit aligné sur le bord extérieur desdits côtés perpendiculaires aux bases, et comportent chacun une fente rectiligne s'étendant parallèlement à leur longueur, fermée du côté de la grande base et ouverte du côté de la petite base à proximité de ladite portion conductrice, ledit conducteur étant ainsi constitué par les parties des côtés des trapèzes perpendiculaires aux bases qui sont situées à l'extérieur desdites fentes et par ladite portion conductrice, et l'espace délimité par les éléments d'antenne, le composant électronique passif et le conducteur ayant sensiblement la forme d'un T dont la barre horizontale est constituée par lesdites fentes et dont la barre verticale est constituée par l'espace séparant les petites bases entre le composant électronique passif et le conducteur.

La présente invention sera mieux comprise à l'aide de la description qui va suivre et des dessins qui l'illustrent à titre d'exemples non limitatifs. Dans ces dessins,

- la figure 1 est une vue schématique en plan d'une première forme d'exécution du transpondeur selon l'invention; et
- la figure 2 est une vue schématique en plan d'une deuxième forme d'exécution du transpondeur selon l'invention.

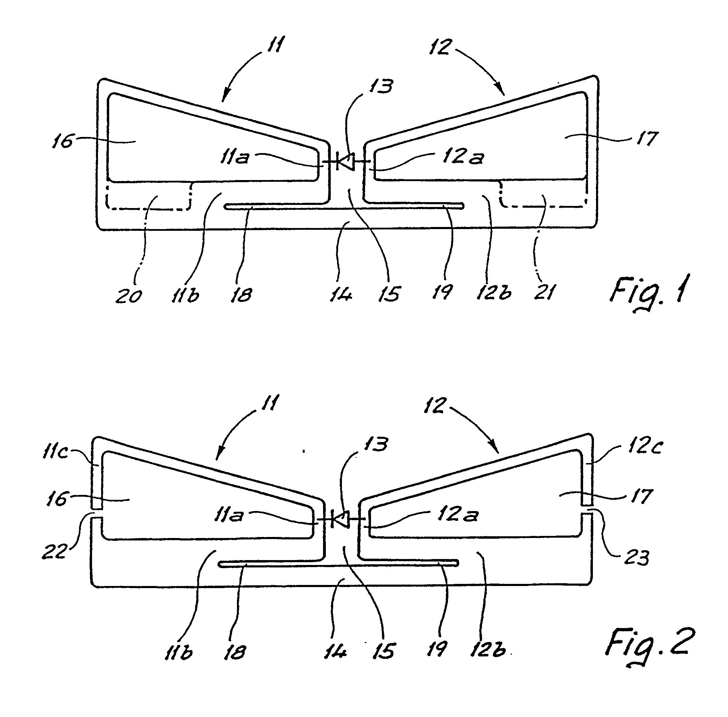

Dans sa forme d'exécution représentée à la figure 1, le transpondeur selon l'invention comporte deux éléments d'antenne, désignés par 11 et 12, qui sont reliés d'une part par une diode, désignée par 13, et par un conducteur, désigné par 14. La diode 13 peut être par exemple, une diode à caractéristique courant-tension quadratique telle que la diode vendue sous le numéro 5 082-2835 par la société Hewlett-Packard.

Les éléments d'antenne 11 et 12 sont percés chacun d'une ouverture centrale désignée respectivement par 16 et 17. Ces éléments d'antenne 11 et 12 sont fabriqués en une seule pièce avec le conducteur 14 par découpage d'une mince feuille de métal.

Ils sont ainsi constitués par un ruban métallique formant dans son plan une boucle qui est fermée dans le présent exemple, cette boucle entourant un espace dépourvu de tout élément métallique.

Les divers composants du transpondeur sont fixés sur un support en un matériau diélectrique qui n'a pas été représenté car il peut être de n'importe quelle forme.

Le fonctionnement du transpondeur de la figure 1 est identique à celui du transpondeur décrit dans la demande de brevet EP-A-0 172 445 déjà mentionnée et ne sera pas expliqué à nouveau ici.

Il faut toutefois relever que, à dimensions extérieures égales, la surface des parties métalliques du transpondeur selon l'invention, notamment la surface des éléments d'antenne 11 et 12, est beaucoup plus faible que la surface des parties métalliques du transpondeur décrit dans la demande de brevet EP-A-0172445 mentionnée ci-dessus, grâce au fait que ces éléments d'antenne ont la forme générale d'une boucle fermée entourant un espace dépourvu de tout élément métallique.

La capacité du condensateur parasite formé par ces éléments d'antenne 11 et 12 et le corps de la personne portant le transpondeur est donc beaucoup plus faible dans le transpondeur de la figure 1 que dans celui de l'art antérieur. Il en résulte que le rendement du transpondeur selon l'invention est plus grand que celui du transpondeur connu, pour les raisons expliquées ci-dessus.

Les boucles constituant les éléments d'antenne 11 et 12 ont chacune la forme générale d'un trapèze rectangle. Les petites bases 11a et 12a de ces trapèzes sont disposées en regard l'une de l'autre et parallèlement l'une à l'autre, et sont reliées par la diode 13.

Les côtés 11b et 12b des trapèzes que forment les éléments d'antenne 11 et 12 et qui sont perpendiculaires aux bases 11a et 12a sont alignés l'un sur l'autre. Ces côtés 11b et 12b comportent chacun une fente 18, respectivement 19, qui s'allonge sur une partie de leur longueur parallèlement à cette longueur, qui est fermée du côté des grandes bases 11 c et 12 c des trapèzes, et qui s'ouvre sur l'espace séparant les petites bases 11a et 12a. Le conducteur 14 est ainsi formé par les parties extérieures des côtés 11b et 12b, séparées du reste de ces côtés par les fentes 18 et 19, prolongées et reliées l'une à l'autre par une portion conductrice de liaison.

Dans cette forme d'exécution, l'espace 15 délimité par les éléments d'antenne 11 et 12, la diode 13 et le conducteur 14 a donc sensiblement la forme d'un T dont la barre horizontale est constituée par les fentes 18 et 19 et la barre verticale est constituée par l'espace séparant les deux petites bases 11a et 12a entre la diode 13 et le conducteur 14.

Il a été trouvé que, à encombrement égal, le rendement du transpondeur de la figure 1 n'est pas sensiblement supérieur à celui d'un transpondeur dont les éléments d'antenne auraient une forme différente, par exemple rectangulaire, mais que ce rendement est beaucoup plus constant d'un transpondeur à l'autre. Cette dernière caractéristique représente un avantage important du transpondeur de la figure 1, car elle augmente sensiblement la proportion des transpondeurs qui sont reconnus comme bons lors de leur contrôle final de fabrication.

La figure 1 représente également une variante de la forme d'exécution du transpondeur selon l'invention qui vient d'être décrite.

Dans cette variante, les côtés 11b et 12b des éléments d'antenne 11 et 12 sont découpés en suivant les lignes dessinées en traits mixtes à la figure 1, et les parties désignées par 20 et 21 sont éliminées. Il en résulte une diminution de la surface des parties métalliques des éléments d'antenne 11 et 12, et donc une augmentation du rendement du transpondeur, pour les mêmes raisons que celles qui ont été évoquées ci-dessus.

Le transpondeur représenté à la figure 2 a la même forme générale et comporte les mêmes éléments que celui de la figure 1.

La différence entre ces transpondeurs réside dans la présence de fentes transversales 22 et 23 qui coupent respectivement les grandes bases 11c et 12c des éléments d'antenne 11 et 12 du transpondeur de la figure 2.

Il a été constaté que ces fentes 22 et 23 améliorent encore le rendement du transpondeur selon l'invention probablement par le fait qu'elles empêchent la circulation des courants qui, sans elles, sont induits dans les boucles formées par les éléments d'antenne 11 et 12.

## Revendications

1. Transpondeur passif comportant deux éléments d'antenne (11, 12) reliés par un composant électronique passif non linéaire (13) et par un conducteur (14) disposé en parallèle avec le composant électronique passif (13), caractérisé par le fait que chacun des éléments d'antenne (11, 12) est constitué par un ruban métallique formant dans son plan une boucle fermée entourant un espace (16, 17) dépourvu de tout élément métallique, lesdites boucles ayant la forme générale de trapèzes rectangles dont les petites bases (11a, 12a) sont disposées en regard l'une de l'autre et parallèlement l'une à l'autre, ledit composant électronique (13) étant branché entre ces petites bases (11a, 12a), et dont les côtés perpendiculaires aux bases (11b, 12b) sont alignés l'un sur l'autre, sont reliés par une portion conductrice également constituée par un ruban métallique, ayant une largeur inférieure à la largeur desdits côtés perpendiculaires aux bases (11b, 12b) et disposée de manière que son bord extérieur soit aligné sur le bord extérieur desdits côtés perpendiculaires aux bases (11b, 12b), et comportent chacun une fente rectiligne (18, 19) s'étendant parallèlement à leur longueur, fermée du côté de la grande base et ouverte du côté de la petite base (11a, 12a) à proximité de ladite portion conductrice, ledit conducteur (14) étant ainsi constitué par les parties des côtés des trapèzes perpendiculaires aux bases (11b, 12b) qui sont situées à l'extérieur desdites fentes (18, 19) et par ladite portion conductrice, et l'espace (15) délimité par les éléments d'antenne (11, 12), le composant électronique passif (13) et le conducteur (14) ayant sensiblement la forme d'un T dont la barre horizontale est constituée par lesdites fentes (18, 19) et dont la barre verticale est constituée par l'espace séparant les petites bases (11a, 12a) entre le composant électronique passif (13) et le conducteur (14).

2. Transpondeur passif selon la revendication 1, caractérisé par le fait que chacune des grandes bases (11c, 12c) desdits trapèzes est coupée par une fente transversale (22, 23).

## Claims

1. Passive transponder including two antenna elements (11, 12) coupled by a non-linear passive electronic component (13) and by a conductor (14) arranged in parallel with said passive electronic component (13), characterized by the fact that each of said antenna elements (11, 12) is formed by a metallic ribbon arranged in a planar loop surrounding a space (16, 17) devoid of any metallic element, said loops having the general shape of rectangle trapeziums the small bases (11a, 12a) of which are arranged facing and parallel to one another, said electronic component (13) being connected between these small bases (11a, 12a), and the sides of which that are perpendicular to the bases (11b, 12b) are aligned with one another, are connected by a conductive portion likewise formed by a metallic ribbon having a width less than the width of said sides that are perpendicular to the bases (11b, 12b) and so disposed that its outer edge is aligned with the outer edge of said sides that are perpendicular to the bases (11b, 12b), and each includes a rectilinear slot (18, 19) extending parallel to its length, closed on the side of the large base and opened on the side of the small base (11a, 12a) proximate said conductive portion, said conductor (14) thus being formed by the portions of the sides of the trapeziums that are perpendicular to the bases (11b, 12b) which are located outwardly of said slots (18, 19) and by said conductive portion, and the space (15) bounded by the antenna elements (11, 12), the passive electronic component (13) and the conductor (14) having substantially the form of a T, the horizontal bar of which is formed by said slots (18, 19) and the vertical bar of which is formed by the space separating the small bases (11a, 12a) between the passive electronic component (13) and the conductor (14).

2. Passive transponder according to claim 1, characterized by the fact that each of the large bases (11c, 12c) of said trapeziums is cut by a transversal slot (22, 23).

## Patentansprüche

1. Passiver Transponder, enthaltend zwei Antennenteile (11, 12), die durch einen passiven, nicht linearen, elektronischen Bauteil (13) und durch einen Leiter (14), der parallel zum passiven, elektronischen Bauteil (13) angeordnet ist, verbunden sind, dadurch gekennzeichnet, daß jeder Antennenteil (11, 12) durch ein metallisches Band gebildet wird, das in seiner Ebene eine geschlossene Schleife bildet, die einen Raum (16, 17) umschließt, der von allen metallischen Teilen frei ist, wobei diese Schleifen die allgemeine Form eines rechtwinkeligen Trapezes aufweisen, deren kleine Basen (11a, 12a) einander gegenuberliegend und zueinander parallel angeordnet sind, wobei der elektronische Bauteil (13) eine Verbindung zwischen diesen kleinen Basen (11a, 12a) herstellt und deren zu den Basen (11b, 12b) rechtwinkelige Seiten, die miteinander fluchten, durch einen Leiterteil, der ebenfalls durch ein metallisches Band gebildet wird, verbunden sind, das eine kleinere Breite als die Breite der zu den Basen (11b, 12b) rechtwinkeligen Seiten aufweist und so angeordnet ist, daß sein äußerer Rand mit dem äußeren Rand der zu den Basen (11b, 12b) rechtwinkeligen Seiten fluchtet und wobei jede einen geraden Schlitz (18, 19) aufweist, der sich parallel zu ihrer Länge erstreckt und auf der Seite der großen Basis geschlossen und auf der Seite der kleinen Basis (11a, 12a) in der Nähe des Leiterteils geöffnet ist, wobei der Leiter (14) auf diese Weise durch die zu den Basen (11b, 12b) rechtwinkeligen Seitenteile der Trapeze, welche außerhalb der Schlitze (18, 19) angeordnet sind und durch den Leiterteil gebildet wird, und der Raum (15), der durch die Antennenteile (11, 12), den passiven elektronischen Bauteil (13) und den Leiter (14) begrenzt wird, etwa die Form eines T aufweist, dessen horizontaler Balken durch die Schlitze (18, 19) gebildet wird und dessen vertikaler Balken durch den Raum gebildet wird, der die kleinen Basen (11a, 12a) zwischen dem passiven elektronischen Bauteil (13) und dem Leiter (14) trennt.

2. Passiver Transponder nach Anspruch 1, dadurch gekennzeichnet, daß jede große Basis (11c, 12c) der Trapeze durch einen quer verlaufenden Schlitz (22, 23) unterbrochen ist.

Fig. 1

Fig. 2